Europäisches Patentamt

European Patent Office

Office européen des brevets

(19)

(11) **EP 0 578 324 B1**

(12) **EUROPÄISCHE PATENTSCHRIFT**

(45) Veröffentlichungstag und Bekanntmachung des Hinweises auf die Patenterteilung:
**27.10.1999   Patentblatt 1999/43**

(51) Int Cl.⁶: **H04B 1/48**

(21) Anmeldenummer: **93201972.2**

(22) Anmeldetag: **06.07.1993**

(54) **Funkgerät mit einer Antennenumschaltvorrichtung**

Radio transceiver with antenna switch

Radio émetteur-récepteur avec un dispositif de commutation d'antenne

(84) Benannte Vertragsstaaten:
**DE FR GB**

(30) Priorität: **07.07.1992   DE 4222190**

(43) Veröffentlichungstag der Anmeldung:
**12.01.1994   Patentblatt 1994/02**

(73) Patentinhaber:
• **Philips Patentverwaltung GmbH
  22335 Hamburg (DE)**
  Benannte Vertragsstaaten:
  **DE**
• **Koninklijke Philips Electronics N.V.
  5621 BA Eindhoven (NL)**
  Benannte Vertragsstaaten:
  **FR GB**

(72) Erfinder:
• **Birth, Winfried
  D-2000 Hamburg 1 (DE)**
• **Marshall, Christopher
  D-2000 Hamburg 1 (DE)**
• **Saur, Erich
  D-2000 Hamburg 1 (DE)**
• **Morbitzer, Holger
  D-2000 Hamburg 1 (DE)**

(74) Vertreter: **Volmer, Georg, Dipl.-Ing. et al
Philips Patentverwaltung GmbH,
Röntgenstrasse 24
22335 Hamburg (DE)**

(56) Entgegenhaltungen:
EP-A- 0 446 050          DE-A- 1 591 010
US-A- 5 054 114

• **WIRELESS WORLD Bd. 81, Nr. 1469, Januar
1975, LONDON,GB Seite 12 LIEBER 'Passive
solid-state antenna switch'**

**Beschreibung**

Die Erfindung betrifft ein Funkgerät mit einer Antennenumschaltvorrichtung für wechselweisen Sende- und Empfangsbetrieb mit einer Senderendstufe und einer Empfängereingangsstufe, wobei am Ausgang der Senderendstufe mindestens zwei Impedanztransformatoren angeordnet sind und bei dem Mittel vorgesehen sind, die durch Änderung der Ausgangsimpedanz der Senderendstufe eine Umschaltung zwischen Sende- und Empfangsbetrieb bewirken.

Bei wechselweisem Sende- und Empfangsbetrieb wird entweder nur gesendet oder nur empfangen. Beim neuen paneuropäischen Mobilfunksystem werden die mobilen Funkgeräte im sog. Burstmodus betrieben, wobei die digitalen Sprach- oder Datensignale zeitlich so komprimiert werden, daß sie in diskreten, voneinander zeitlich getrennten Zeitschlitzen gesendet bzw. empfangen werden können. Im Gegensatz zu sog. Voll-Duplex-Systemen, bei denen eine Antenne gleichzeitig als Sende- und Empfangsantenne verwendet wird, wird bei Funkgeräten mit wechselweisen Sende- und Empfangsbetrieb die Antenne entsprechend der benötigten Betriebsart über eine Umschaltvorrichtung wahlweise an die Senderendstufe oder an die Empfängereingangsstufe angekoppelt.

Aus EP 0446050 A2 ist beispielsweise eine Vorrichtung zur Sende/Empfangs-Umschaltung bekannt, bei der mindestens vier $\lambda/4$-Wellenleiter und zwei Schaltdioden so angeordnet sind, daß durch Umschalten der Dioden wahlweise eine Senderendstufe oder eine Empfängereingangsstufe mit der gemeinsamen Sende-/Empfangsantenne hochfrequenzmäßig verbunden werden kann.

Bei der oben genannten Anmeldung werden die bekannten Transformationseigenschaften von $\lambda/4$-Wellenleitern benutzt:

Eine an einem Ende eines $\lambda/4$-Wellenleiters anliegenden Eingangsimpedanz wird in Abhängigkeit von den elektrischen Eigenschaften des $\lambda/4$-Wellenleiters, die durch entsprechende Wahl der geometrischen Abmessungen des $\lambda/4$-Wellenleiters gewählt werden können, am anderen Ende des $\lambda/4$- Wellenleiters in eine andere Ausgangsimpedanz transformiert. Zur Antennenumschaltung wird hierbei die Eigenschaft eines $\lambda/4$-Wellenleiters genutzt, daß ein kurzgeschlossener Eingang am anderen Ende des Wellenleiters in einen offenen Eingang transformiert wird und andererseits ein offener Eingang am anderen Ende des Wellenleiters einen Kurzschluß erzeugt. Ein an einem offenen Eingang anliegendes HF-Signal wird auf diese Weise durch den Kurzschluß am anderen Ende des $\lambda/4$-Wellenleiters nicht bedämpft.

Zur wahlweisen Erzeugung von kurzgeschlossenen oder offenen Eingängen werden in der bekannten Schaltungsanordnung PIN-Dioden verwendet, die einen Schaltstrom in der Größenordnung von einigen mA benötigen. Dieser Strom macht bei batteriebetriebenen Handfunkgeräten bereits einen bedeutenden Teil des Empfängerstromverbrauches aus, so daß die verfügbare Betriebszeit des Funkgerätes nennenswert vermindert wird.

Aufgabe der vorliegenden Erfindung ist es, bei einem Funkgerät mit einer Antennenumschaltvorrichtung der eingangs genannten Art den Stromverbrauch zu reduzieren. Zudem soll der Bauteilaufwand reduziert werden, um Volumen zu sparen.

Diese Aufgabe wird bei einem gattungsgemäßen Funkgerät dadurch gelöst, daß die zur Änderung der Ausgangsimpedanz der Senderendstufe vorgesehenen Mittel ein Ein- und Ausschalten der Stromversorgung der Senderendstufe oder eine Änderung der Senderendstufenvorspannung bewirken.

Vorteilhafterweise sind die Impedanztransformatoren $\lambda/4$-Wellenleiter, wobei der mit der Senderendstufe verbundene $\lambda/4$-Wellenleiter die Ausgangsimpedanz der Senderendstufe im sendenden Zustand auf einen Zwischenwert, vorzugsweise die Antennenimpedanz, transformiert. Der zweite, zwischen Antenne und dem ersten $\lambda/4$-Wellenleiter liegende $\lambda/4$-Wellenleiter hat einen Wellenwiderstand, welcher der Impedanz der Antenne entspricht. Auf diese Weise wird im sendenden Zustand die Senderendstufe an die Antenne angepaßt und die Ausgangsleistung der Senderendstufe voll zur Antenne weitergegeben. Zur Umschaltung in den Empfangsbetrieb wird durch geeignete Schaltungsmaßnahmen die Ausgangsimpedanz der Senderendstufe in einen hochohmigen Zustand gebracht. Der Eingangswiderstand des mit der Antenne verbunden $\lambda/4$-Wellenleiters ist ebenfalls hochohmig. Die von der Antenne empfangenen Signale werden durch den hochohmigen Senderzweig allenfalls unwesentlich bedämpft und gelangen somit nahezu ausschließlich zur Empfangseingangsstufe.

Auf diese Weise wird zumindest im Senderzweig kein zusätzlicher Schaltstrom für eine PIN-Diode benötigt, so daß auch bei Verwendung einer PIN-Diodenumschaltung im Empfangszweig bereits eine Stromersparnis gegeben ist.

Der Übergang der Ausgangsimpedanz der Senderendstufe in den hochohmigen Zustand kann beispielsweise durch simples Abschalten der Stromversorgung von der Senderendstufe bewirkt werden.

Mit dieser Schaltungsvariante ist eine besonders einfache Lösung zur Änderung der Ausgangsimpedanz der Senderendstufe gegeben. Durch das Ausschalten der Stromversorgung erhält die Senderendstufe einen relativ hochohmigen Ausgangswiderstand. Wie Messungen zeigen, ist in vielen Fällen dieser Ausgangswiderstand ausreichend hoch, so daß weitere schaltungstechnische Maßnahmen nicht mehr notwendig sind.

Alternativ kann der hochohmige Zustand auch durch Erzeugen einer Sperrspannung in der Vorspannungsschaltung der Senderendstufe hergestellt werden. Eine solche Vorspannungsschaltung ist in üblichen Funkgeräten zur Sendersteuerung bereits vorhanden, so daß kein zusätzlicher Schaltungsaufwand entsteht.

Im Allgemeinen lassen sich bereits mit zwei Impedanztransformatoren ausreichende Dämpfungswerte zwischen Senderendstufe und Empfängereingangsstufe erzielen. Wird jedoch ein noch größerer Dämpfungswert benötigt, so können entsprechend des benötigten Dämpfungswertes noch weitere Impedanztransformatoren vorgesehen werden, für die jedoch beispielsweise für eine PIN-Diodenumschaltung zusätzlicher Schaltstrom benötigt wird.

In einer weiteren Ausführungsform ist zwischen Antenne und Empfänger ein Filter angeordnet.

Diese Lösung ist besonders vorteilhaft, wenn Sende- und Empfangsfrequenz verschieden sind. Da zwischen Antenne und Empfänger üblicherweise ohnehin ein auf die Empfangsfrequenz abgestimmtes Bandpaßfilter angeordnet ist, kann dieses auch so angelegt werden, daß es auf der Sendefrequenz bzw. im Sendeband eine hohe Impedanz aufweist. Dadurch wird im Sendebetrieb die von der Senderendstufe abgegebene Leistung weitgehend über die Antenne abgestrahlt und das Empfangsteil ist vor Zerstörung geschützt. Somit ist auch im Empfangsteil kein zusätzlicher Schaltstrom erforderlich und es werden Bauteile gegenüber dem Stand der Technik eingespart.

In einer anderen Ausführungsform ist vor der Empfängereingangsstufe ein Impedanztransformator und vor oder in der Empfängereingangsstufe ein schaltstromgesteuertes Schaltelement zur Umschaltung zwischen Sende- und Empfangsbetrieb angeordnet.

Diese Ausführungsform eignet sich besonders für Anwendungen bei denen Empfangs- und Sendefrequenz gleich oder annähernd gleich sind. Hierdurch kann bei der Sende-Empfangsumschaltung eine genügende Sperrwirkung erzielt werden.

Besonders vorteilhaft ist es, als schaltstromgesteuertes Schaltelement einen in der Empfängereingangsstufe angeordneten Eingangstransistor zu verwenden.

Der Schaltstrom kann hierzu der Basis des Eingangstransistors zugeführt werden und auf diese Weise die Basis-Emitter-Strecke des Transistors durchschalten. Auf diese Weise wird der Eingang der Empfängereingangsstufe kurzgeschlossen. Durch einmalige $\lambda/4$-Transformation wird der Eingangswiderstand des im Empfängerzweig angeordneten $\lambda/4$-Wellenleiters hochohmig, so daß im Sendebetrieb die Sendeleistung nicht an den Eingang der Empfängereingangsstufe gelangt. Durch die Mitverwendung des Eingangstransistors als Schaltelement wird auf diese Weise eine ansonsten zusätzlich erforderliche PIN-Diode eingespart. Dies reduziert den Platzbedarf und den Stromverbrauch, wodurch sich auch eine Kostensenkung ergibt.

Eine besonders vorteilhafte Ausführungsform sieht vor, diesen zum Sperren des Empängers erforderlichen Schaltstrom auch zur Stromversorgung der Senderendstufe oder eines der Senderendstufe vorgeschalteten Sendevorverstärkers vorzusehen.

Der für das Schaltelement erforderliche Schaltstrom ist jeweils nur im Sendebetrieb erforderlich. Durch zusätzliche Verwendung dieses Schaltstroms zur Stromversorgung der Senderendstufe und/oder einer Sendertreiberstufe geht dieser Schaltstrom nicht nutzlos verloren. Er dient vielmehr zur ohnehin notwendigen Stromversorgung des Senders oder eines Teils davon im Sendebetrieb, so daß der Stromverbrauch des Schaltelements durch die Doppelausnutzung des Schaltstroms nicht zusätzlich in Erscheinung tritt.

Die Erfindung wird nun anhand von in den Zeichnungen dargestellten Ausführungsbeispielen näher beschrieben.

Es zeigen:

Fig. 1    eine Anordnung zur Antennenumschaltung bei unterschiedlicher Empfangs- und Sendefrequenz.

Fig. 2    eine Antennenumschaltvorrichtung bei gleicher Sende- und Empfangsfrequenz.

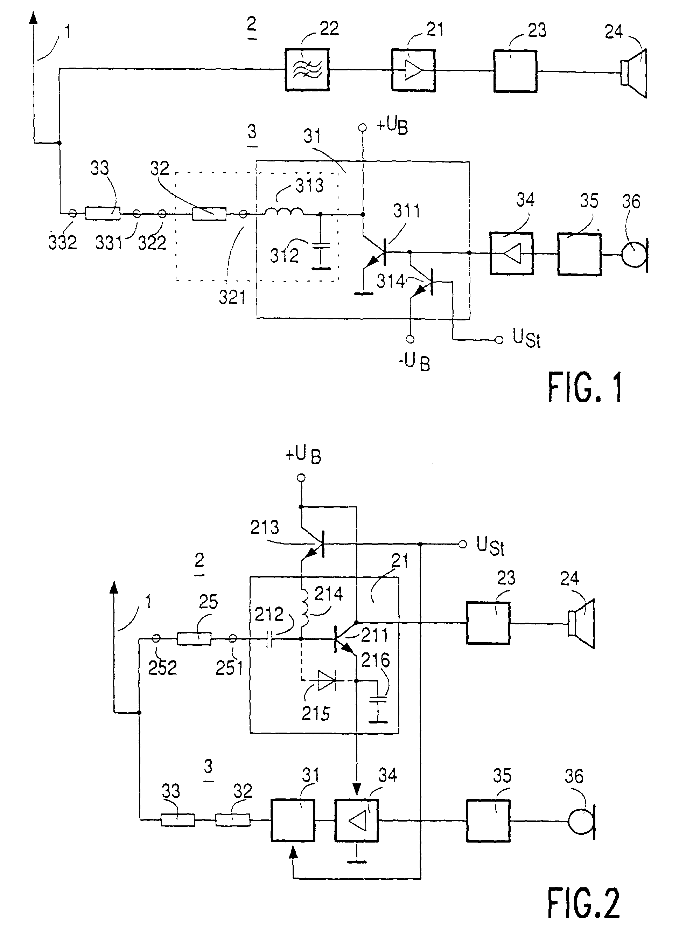

Das Ausführungsbeispiel zeigt in Fig. 1 in schematischer Darstellung den HF-Teil eines Funkgerätes für wechselweisen Sende- und Empfangsbetrieb. An einer gemeinsam genutzten Antenne 1 sind ein Empfangsteil 2 und eine Sendeteil 3 angeschlossen. Zwischen Antenne 1 und Empfängereingangsstufe 21 ist ein Bandpaßfilter 22 zwischengeschaltet. Das Bandpaßfilter 22 ist so bemessen, daß es nur die zu empfangenen Frequenzen durchläßt und die Sendefrequenzen hochohmig reflektiert. Im Sendebetrieb wird die vom Sendeteil 3 erzeugte Sendeleistung durch das Bandpaßfilter 22 hinreichend gedämpft, so daß die Empfängereingangsstufe 21 nicht zerstört wird. Gleichzeitig bleibt die Anpassung des Sendeteils 3 an die Antenne 1 erhalten.

Diese Schaltungsvariante mit einem extrem einfachen Aufbau im Empfangsteil eignet sich somit besonders für Funkgeräte, bei denen Sende- und Empfangsfrequenz unterschiedlich gewählt sind.

Der Vollständigkeithalber ist in der Figur 1 zur weiteren empfangsseitigen Signalverarbeitung ein Schaltungsblock 23 und ein daran angeschlossener Lautsprecher 24 gezeigt. Diese weitere Signalaufbereitung, wie beispielsweise Zwischenfrequenzumsetzung, Demodulation und digitale Signalverarbeitung im Niederfrequenzbereich sind dem Fachmann geläufig und für das Wesen dieser Erfindung ohne Bedeutung und daher auch nur schematisch im Schaltungsblock 23 zusammengefaßt.

Ebenfalls als schematischer Schaltblock 35 ist die von einem Mikrophon 36 stammende Verarbeitung eines Sprachsignals und die Modulation der Sendefrequenz mit diesem Sprachsignal dargestellt. Das modulierte Sendesignal wird einem Sendevorverstärker 34 zugeführt. Von diesem Sendevorverstärker 34 gelangt das vorverstärkte Sendesignal zu einer Senderendstufe 31.

Zur Ausführung der Erfindung eignet sich prinzipiell jede Schaltungsvariante einer Senderendstufe mit Transistoren oder anderen aktiven Bauelementen, die sich in hochohmigen Zustand schalten lassen. Zur Verdeutlichung des Wesens der Erfindung ist im Ausführungsbeispiel in der Senderendstufe 31 lediglich ein Senderendstufentransistor 311 gezeigt. Mittels einem Schalttransistor 314 kann der Senderendstufentransistor 311 im Empfangsfall in den nichtaktiven, hochohmigen Zustand geschaltet werden.

Mit dem Kollektor des Sender-Endstufentransistors 311 ist ein erster $\lambda$/4-Wellenleiter 32 mit seinem ersten Anschluß 321 verbunden. Die am Ausgang des Senderendstufentransistors 311 meßbare Sitzkapazität 312 und Bonddrahtinduktivität 313 sind bei der Dimensionierung dieses ersten $\lambda$/4-Wellenleiters 32 mit einbezogen. Dieser erste $\lambda$/4-Wellenleiter 32 ist so bemessen, daß er gemäß Formel

$$Z_w = \sqrt{Z_{Ant} * Z_{Trans}}$$

die Impedanz $Z_w$ hat, und somit die Transistorimpedanz $Z_{Trans}$ an die Antennenimpedanz $Z_{Ant}$ anpaßt. Der $\lambda$/4-Wellenleiter kann als Stripline, Koaxialkabel oder mittels einem LC-Netzwerk realisiert sein. Am zweiten Anschluß 322 des ersten $\lambda$/4-Wellenleiters 32 ist mit seinem ersten Anschluß 331 ein zweiter $\lambda$/4-Wellenleiters 33 verbunden. Der zweite Anschluß 332 des zweiten $\lambda$/4-Wellenleiters 33 ist mit der Antenne 1 verbunden.

Der zweite $\lambda$/4-Wellenleiter 33 weist einen Wellenwiderstand auf, der dem Fußpunktwiderstand der Antenne 1 entspricht. Dieser Widerstand liegt üblicherweise in der Größenordnung von 50 bis 75 Ohm, es sind aber gemäß dem Prinzip der Erfindung auch beliebige andere Antennenimpedanzen anpaßbar.

Auf diese Weise ist im Sendebetrieb die Senderendstufe auf den Eingangswiderstand des zweiten $\lambda$/4-Wellenleiters 33 angepaßt. Der Wellenwiderstand des zweiten $\lambda$/4-Wellenleiters 33 ist wie beschrieben mit der Antennenimpedanz identisch, so daß die volle Sendeleistung der Senderstufe 31 zur Antenne 1 weitergeleitet wird. Durch das Bandpaßfilter 22 des Empfangsteils 2 wird das Sendesignal nur unwesentlich bedämpft.

Im Empfangsbetrieb wird durch den ersten Schalttransistor 314 der Senderendstufentransistor 311 in einen hochohmigen Zustand geschaltet. Der erste $\lambda$/4-Wellenleiter 32 ist somit an seinem ersten Anschluß 321 hochohmig abgeschlossen. Durch erstmalige $\lambda$/4-Wellenwiderstandstransformation bewirkt dieser hochohmige Abschluß am zweiten Anschluß 322 des ersten $\lambda$/4-Wellenleiters 32 einen niederohmigen Abschluß. Dieser niederohmige Abschluß des zweiten Anschlusses 322 des ersten $\lambda$/4-Wellenleiters 32 ist gleichzeitig niederohmiger Abschluß des zweiten $\lambda$/4-Wellenleiters 33 an seinem ersten Anschluß 331. Durch nochmalige $\lambda$/4-Wellenleitertransformation im zweiten $\lambda$/4-Wellenleiter 33 wird der niederohmige Abschluß am zweiten Anschluß 322 des zweiten $\lambda$/4-Wellenleiters 32 wieder in einen hochohmigen Abschluß transformiert. Auf diese Weise ist der Eingangswiderstand des Sendeteils 3 hochohmig.

Durch parasitäre Widerstände des Senderendstufentransistors 311 im ausgeschalteten Zustand ist der Idealfall eines unendlichen Widerstands am ersten Anschluß 321 des ersten $\lambda$/4-Wellenleiters 32 nicht erreichbar. Messungen haben aber ergeben, daß mit handelsüblichen Transistoren ein Abschlußwiderstand in der Größenordnung von 200-300 Ohm ohne besonderen Aufwand zu erreichen ist. Mit diesem Abschluß anstelle eines idealen unendlichen Widerstands kann erreicht werden, daß die von der Antenne 1 empfangenen Eingangssignale von dem Sendeteil 3 nur in der Größenordnung von 1 dB gedämpft werden. Dieser Dämpfungswert ist in den meisten Fällen ausreichend. Sollten jedoch tatsächlich noch geringere Dämpfungswerte erforderlich sein, so ist es in das Belieben des Fachmanns gestellt, den Senderendstufentransistor 311 durch ihm bekannte Maßnahmen im ausgeschalteten Zustand auf einen höheren Ausgangswiderstand zu bringen.

In Fig. 2 ist ein Ausführungsbeispiel dargestellt, das sich besonders für solche Funkgeräte eignet, bei denen Sende- und Empfangsfrequenz gleich gewählt sind. Anstelle oder zusätzlich zu einem nicht dargestellten Bandpaßfilter liegt zwischen Antenne 1 und dem Eingang der Empfängereingangsstufe 21 ein dritter $\lambda$/4-Wellenleiter 25, dessen erster Anschluß 251 mit der Empfängereingangsstufe 21, und dessen zweiter Anschluß 252 mit der Antenne 1 verbunden ist.

In der Empfängereingangsstufe 21 ist ein HF-Eingangstransistor 211 angeordnet, welchem über einen Koppelkondensator 212 die von der Antenne 1 stammenden Eingangssignale zugeführt werden können. Über einen zweiten, ebenfalls als Stromschalter ausgebildeten Schalttransistor 213 ist der Basis des HF-Eingangsstufentransistors 211 ein Schaltstrom zuführbar. Eine HF-Drossel 214 verhindert hierbei daß HF-Eingangssignale im Empfangsbetrieb durch den Schalttransistor 213 bedämpft werden. Über einen Kondensator 216 ist der Ermittler des HF-Eingangstransistors 211 HF-mäßig geerdet.

Solange keine oder eine negative Steuerspannung $U_{St}$ anliegt, ist das Funkgerät im Empfangszustand. In diesem Zustand hat der empfängerseitige $\lambda$/4-Wellenleiter 25, dessen Wellenwiderstand der Antennenimpedanz entspricht, lediglich eine Leitungsfunktion. Gleichfalls ist es möglich, den $\lambda$/4-Wellenleiter 25 zur Anpassung der Empfängereingangsstufe 21 an die Antenne 1 zu verwenden, indem sein Wellenwiderstand entsprechend gewählt wird. Idealerweise wird das Empfangssignal von der Antenne 1 somit vollständig der Empfangseingangsstufe 21 zugeführt.

Im Sendebetrieb wird durch eine Steuerspannung $U_{St}$ der empfängerseitige Schalttransistor 213 leitend geschaltet. Die dabei an der Basis-Emitter-Strecke des Eingangstransistors 211 liegende Spannung ist so groß, das sie die Basis-Emitter-Strecke des HF-Eingangstransistors 211 ebenfalls in leitenden Zustand schaltet. Auf diese Weise fließt der Schaltstrom von der Betriebsspannung $+U_B$ über den empfängerseitigen Schalttransistor 213, über die HF-Drossel 214 und über die Basis-Emitter-Strecke des Eingangstransisrs 211, die dadurch sehr niederohmig wird. Somit ist der empfängerseitige $\lambda/4$-Wellenleiter 25 an seinem ersten Ende 251 niederohmig abgeschlossen. Das zweite Ende 252 des $\lambda/4$-Wellenleiters 25 ist daher hochohmig. Die Sendeleistung wird daher weitgehend vollständig von der Sendestufe 31 über die $\lambda/4$-Wellenleiter 32 und 33, analog wie im ersten Ausführungsbeispiel, zur Antenne 1 geleitet.

Im Ausführungsbeispiel ist ferner vorgesehen, den Schaltstrom über die Basis-Emitter-Strecke von Transistor 211 als Versorgungsstrom dem Sendevorverstärker 34 zuzuführen. Dadurch wird dieser Strom sehr ökonomisch im Sender genutzt. Alternativ kann der Basis-Emitter-Strecke des Eingangstransistors 211 eine zusätzliche gestrichelt dargestellte Diode 215 parallel geschaltet werden. Die Durchflußspannung dieser Diode ist allerdings höher zu wählen, als die Durchflußspannung der Basis-Emitter-Diode des Eingangstransistors 211, so daß die zusätzliche Diode 215 während des Empfangsbetriebs den Betrieb des HF-Eingangstransistors 211 nicht beeinträchtigt. Diese zusätzliche Diode 215 kann mit dem Transistor 211 auf dem selben Chip integriert werden.

## Patentansprüche

1. Funkgerät mit einer Antennenumschaltvorrichtung für wechselweisen Sende- und Empfangsbetrieb mit einer Senderendstufe (31) und einer Empfängereingangsstufe (21), wobei am Ausgang der Senderendstufe (31) mindestens zwei Impedanztransformatoren (32, 33) angeordnet sind und bei dem Mittel (314) vorgesehen sind, die durch Änderung der Ausgangsimpedanz der Senderendstufe (31) eine Umschaltung zwischen Sende- und Empfangsbetrieb bewirken,
dadurch gekennzeichnet,
daß die zur Änderung der Ausgangsimpedanz der Senderendstufe (31) vorgesehenen Mittel (314) ein Ein- und Ausschalten der Stromversorgung der Senderendstufe (31) oder eine Änderung der Senderendstufenvorspannung bewirken.

2. Funkgerät nach Anspruch 1
dadurch gekennzeichnet, daß als Impedanztransformatoren $\lambda/4$-Wellenleiter (32,33) vorgesehen sind.

3. Funkgerät nach Anspruch 1 oder 2,
dadurch gekennzeichnet,
daß zwischen Antenne (1) und Empfängereingangsstufe (21) ein Filter (22) angeordnet ist.

4. Funkgerät nach Anspruch 1 oder 2,
dadurch gekennzeichnet,
daß vor der Empfängereingangsstufe (21) ein Impedanztransformator (25) angeordnet ist, und daß vor oder in der Empfängereingangsstufe ein schaltstromgesteuertes Schaltelement zur Umschaltung zwischen Sende- und Empfangsbetrieb vorgesehen ist.

5. Funkgerät nach Anspruch 4
dadurch gekennzeichnet,
daß das schaltstromgesteuerte Schaltelement die Basis-Emitter-Strecke eines in der Empfängereingangsstufe (21) angeordneten Eingangstransistors (211) ist.

6. Funkgerät nach Anspruch 4
dadurch gekennzeichnet,
daß das schaltstromgesteuerte Schaltelement eine zur Basis-Emitter-Strecke des Eingangstransistors (211) parallel geschaltete Diode (215) ist.

7. Funkgerät nach Anspruch 4, 5 oder 6,
dadurch gekennzeichnet,
daß der in der Empfängereingangsstufe (21) vorgesehene Schaltstrom zusätzlich zur Stromversorgung der Senderendstufe (31) und/oder einer Sendertreiberstufe (34) vorgesehen ist.

## Claims

1. A radio set with an antenna switch for alternate transmission and reception, comprising a transmitter output stage (31) and a receiver input stage (21), at least two impedance transformers (32, 33) being connected to the output of the transmitter output stage (31) and the radio set including means (314) that cause a switch-over to occur between transmission and reception by a change of the output impedance of the transmitter output stage (31), characterized in that at least two impedance transformers (32, 33) are arranged at the output of the transmitter output stage (31), and switch means (311, 314) are provided which effect a change-over between transmission and reception as a result of a change of the output impedance of the transmitter output stage (31).

2. A radio set as claimed in Claim 1, characterized in that $\lambda/4$ waveguides (32, 33) are provided as impedance transformers.

3. A radio set as claimed in Claim 1 or 2, characterized in that a filter (22) is connected between the antenna (1) and the receiver input stage (21).

4. A radio set as claimed in Claim 1 or 2, characterized in that an impedance transformer (25) is connected before the receiver input stage (21), and in that before or in the receiver input stage a switching current controlled switch element is arranged for switching between transmission and reception.

5. A radio set as claimed in Claim 4, characterized in that the switching current controlled switch element is the base-emitter path of an input stage transistor (211) arranged in the receiver input stage (21).

6. A radio set as claimed in Claim 4, characterized in that the switching current controlled switch element is a diode (215) connected in parallel with the base-emitter path of the input stage transistor (211).

7. A radio set as claimed in Claim 4, 5 or 6, characterized in that the switching current available in the receiver input stage (21) is additionally used for supplying current to the transmitter output stage (31) and/or to a transmitter driver stage (34).

**Revendications**

1. Radioémetteur-récepteur avec un dispositif de commutation d'antenne pour un fonctionnement alterné d'émission et de réception avec un étage final d'émetteur (31) et un étage d'entrée de récepteur (21), au moins deux transformateurs d'impédance (32, 33) étant montés à la sortie de l'étage final d'émetteur (31) et des moyens (314) qui assurent une commutation entre les modes d'émission et de réception par modification de l'impédance de sortie de l'étage final d'émetteur (31) étant prévus,

caractérisé en ce

que les moyens prévus pour la modification de l'impédance de sortie de l'étage final d'émetteur (31) assurent une mise sous tension et hors tension de l'alimentation électrique de l'étage final d'émetteur (31) ou une modification de la polarisation de l'étage final d'émetteur.

2. Radioémetteur-récepteur selon la revendication 1,

caractérisé en ce

que des guides d'ondes $\lambda/4$ (32, 33) sont prévus comme transformateurs d'impédance.

3. Radioémetteur-récepteur selon l'une des revendications 1 ou 2,

caractérisé en ce

qu'un filtre (22) est disposé entre l'antenne (1) et l'étage d'entrée du récepteur (21).

4. Radioémetteur-récepteur selon l'une des revendications 1 ou 2,

caractérisé en ce

qu'un transformateur d'impédance (25) est disposé avant l'étage d'entrée de récepteur (21) et qu'un élément de commutation commandé par un courant de commutation est prévu en vue de la commutation entre le mode émission et le mode réception avant ou dans l'étage d'entrée du récepteur.

5. Radioémetteur-récepteur selon la revendication 4,

caractérisé en ce

que le trajet base/émetteur d'un transistor d'entrée (211) disposé dans l'étage d'entrée du récepteur (21) est l'élément de commutation commandé par courant de commutation.

6. Radioémetteur-récepteur selon la revendication 4,

caractérisé en ce

que l'élément de commutation commandé par courant de commutation est une diode (215) montée en parallèle au trajet base-émetteur du transistor d'entrée (211).

7. Radioémetteur-récepteur selon l'une des revendications 4, 5 ou 6,

caractérisé en ce

que le courant de commutation prévu dans l'étage d'entrée du récepteur (21) est prévu en plus de l'alimentation électrique de l'étage final d'émetteur (31) et/ou d'un étage d'attaque (34) d'émetteur.

FIG. 1

FIG.2